# EUROPÄISCHE PATENTSCHRIFT

(11) **EP 3 191 702 B1**
(45) Veröffentlichungstag und Bekanntmachung des Hinweises auf die Patenterteilung: **10.04.2019**
(21) Anmeldenummer: 15795197.1
(22) Anmeldetag: 18.11.2015
(51) Int. Cl.: F02G 5/00

(54) **VERFAHREN ZUM ERWÄRMEN EINES BETRIEBSSTOFFS SOWIE BETRIEBSSTOFFHEIZUNG**
METHOD FOR HEATING AN OPERATING AGENT, AND AN OPERATING AGENT HEATING SYSTEM
PROCÉDÉ POUR RÉCHAUFFER UN CARBURANT ET SYSTÈME DE RÉCHAUFFAGE DE CARBURANT

(30) Priorität: 27.11.2014 DE 102014224287
(43) Veröffentlichungstag der Anmeldung: 19.07.2017
(73) Patentinhaber: Siemens Mobility GmbH, 81739 München (DE)
(72) Erfinder: HINTERMEIR, Stefan, 83229 Aschau I. Ch (DE); BALTES, Jörg, 82194 Gröbenzell (DE)
(86) Internationale Anmeldenummer: PCT/EP2015/076925
(87) Internationale Veröffentlichungsnummer: WO 2016/083202

(56) Entgegenhaltungen:
- EP-A1- 1 662 103
- EP-A1- 2 175 111
- DE-A1- 4 432 576
- US-A1- 2010 242 439

## Beschreibung

Die Erfindung betrifft ein Verfahren zum Erwärmen eines Betriebsstoffs für ein Schienenfahrzeug, insbesondere zum Erwärmen eines Reduktionsmittels zur Abgasnachbehandlung. Ferner betrifft die Erfindung eine Betriebsstoffheizung für ein Schienenfahrzeug, insbesondere zur Erwärmung eines Reduktionsmittels zur Abgasnachbehandlung. Des Weiteren betrifft die Erfindung einen Antrieb, insbesondere einen Dieselantrieb, für ein Schienen- oder Kraftfahrzeug, oder ein Schienen- oder Kraftfahrzeug. - Dieses Dokument beansprucht die Priorität der deutschen Patentanmeldung DE 10 2014 224 287 A1 (27. November 2014), deren Offenbarungsgehalt hiermit durch Rückbezug aufgenommen ist.

Die Abgasgrenzwerte für Fahrzeuge, insbesondere für Schienen- und Kraftfahrzeuge, werden kontinuierlich verschärft. Zum Teil werden die neusten Abgasgrenzwerte nur noch mit einer SCR-Anlage (Selective Catalytic Reduction, selektive katalytische Reduktion von Stickoxiden in Abgasen von Verbrennungsmotoren) erreicht, welche mit einer Harnstofflösung arbeitet, die auf dem Fahrzeug mitgeführt werden muss. Derzeitige Harnstofflösungen haben die Eigenschaft, dass sie je nach einem Harnstoffgehalt ab ca. -10°C einfrieren können. Ein ordnungsgemäßer Betrieb des Fahrzeugs ist dann nicht mehr möglich bzw. die Abgasgrenzwerte können bei eingefrorener Harnstofflösung nicht mehr eingehalten werden. Eine gefrorene Harnstofflösung ist nicht zerstört und kann nach einem Auftauvorgang wieder verwendet werden.

Aus diesem Grund kann es notwendig sein, ein Heiz- bzw. Wärmkonzept in einen Vorratsbehälter für die Harnstofflösung zu integrieren. Dabei muss sowohl auf unterschiedliche Betriebszustände des Fahrzeugs eingegangen werden, als auch auf unterschiedliche Umgebungstemperaturen. Des Weiteren ist zu beachten, dass Harnstofflösungen eine bestimmte Maximaltemperatur von ca. +60°C nicht überschreiten dürfen. Das bedeutet, dass das Wärmkonzept eine Temperatursteuerung oder -regelung benötigt, damit sowohl eine Minimaltemperatur als auch eine Maximaltemperatur der Harnstofflösung nicht unter- bzw. überschritten werden.

Insbesondere bei einem Schienenfahrzeug, beispielsweise bei einer Diesellokomotive, führt das zu folgendem Problem. Wenn der Verbrennungsmotor des Schienenfahrzeugs läuft, ist das Bordnetz des Schienenfahrzeugs vollständig aktiviert und sämtliche Steuerungs-, Regelungs- und/oder Überwachungsschaltungen des Schienenfahrzeugs sind aktiv. In diesem Betriebszustand kann eine Erwärmung eines Harnstoffbehälters des Schienenfahrzeugs überwacht werden. Möchte man jedoch auch in einem Vorwärmbetrieb den Harnstoffbehälter mit Wärme versorgen, ist eine Temperatursteuerung oder -regelung über eine Bordelektronik nicht möglich, weil das Bordnetz und sämtliche Steuerungs-, Regelungs- und/oder Überwachungsschaltungen im Vorwärmbetrieb des Schienenfahrzeugs ausgeschaltet sind.

Bekannt sind SCR-Abgasanalgen bei Lastkraftwagen. Auch bei einem Lastkraftwagen wird ein Vorratsbehälter einer Harnstofflösung (meist AdBlue®) mittels einer Kühlflüssigkeit des Lastkraftwagens gewärmt, welche jedoch, analog zu oben, nur in einem Betrieb des Lastkraftwagens aktiv ist. Da bei einem Lastkraftwagen eine Vorratsmenge an Harnstofflösung wesentlich geringer als bei einem vergleichsweise großen Schienenfahrzeug ist, kann für den Fall, dass die Harnstofflösung gefroren ist, die Harnstofflösung schnell wieder aufgetaut werden.

Die DE 199 35 920 A1 offenbart eine Vorrichtung und ein Verfahren zum Beheizen eines Vorratsbehälters für Harnstofflösung einer Abgasnachbehandlungsanlage eines Verbrennungsmotors für ein Nutzfahrzeug. Die im Vorratsbehälter gespeicherte Harnstofflösung ist durch eine Abwärme des Verbrennungsmotors beheizbar, wobei eine Kühlflüssigkeit des Verbrennungsmotors durch Heizrohre im Vorratsbehälter hindurchgeführt wird. Hierbei ist die Harnstofflösung im Vorratsbehälter in Bezug auf eine Größe des Vorratsbehälters vergleichsweise großvolumig auftaubar. Für eine Begrenzung einer Temperatur der Harnstofflösung sind ein Wärmetauscher und Thermostatventile vorgesehen.

Die EP 2 226 479 A1 lehrt eine elektrische Heizeinrichtung mit einer Mehrzahl von Heizelementen für einen Vorratsbehälter einer Harnstofflösung für eine Abgasnachbehandlungsanlage eines Verbrennungsmotors eines Kraftfahrzeugs sowie ein Verfahren zum Aufschmelzen einer im Vorratsbehälter gefrorenen Harnstofflösung. Um ein Volumen der Harnstofflösung aufzuschmelzen ist vorgesehen, dass die Heizeinrichtung eine Steuereinheit aufweist, durch welche elektrische Heizelemente einzeln oder in Gruppen zum Aufschmelzen des Volumens nacheinander betreibbar sind.

Bei einem größeren Verbrennungsmotor, der sich in einer Größenordnung zwischen einem Verbrennungsmotor für einen Lastkraftwagen und einem Verbrennungsmotor für ein Schienenfahrzeug befindet, wird ähnliches Vorgehen angewandt. Sobald der Verbrennungsmotor eingeschaltet ist, übernimmt ein verbrennungsmotorinternes Steuer- oder Regelsystem eine Kühlwasserzufuhr in den Vorratsbehälter der Harnstofflösung. Sollte die Temperatur der Harnstofflösung einen Schwellenwert unterschreiten, dann öffnet dieses Ventil und Kühlflüssigkeit aus dem Verbrennungsmotor strömt durch den Vorratsbehälter zum Erwärmen der Harnstofflösung. Bei Erreichen einer oberen Schwellentemperatur schließt dieses Ventil wieder.

Die DE 10 2008 011 329 A1 offenbart ein Schienenfahrzeug mit einem Verbrennungsmotor und einer mit dem Verbrennungsmotor verbundenen SCR-Abgasanlage. Die SCR-Abgasanlage umfasst eine Zufuhreinrichtung für eine Harnstofflösung, welche dazu ausgebildet ist, einem Abgasstrom des Verbrennungsmotors die Harnstofflösung zuzuführen. Hierfür weist die Zufuhreinrichtung einen Vorratsbehälter für die Harnstofflösung auf. Die Zufuhreinrichtung kann ferner eine Temperiereinrichtung zum Kühlen und/oder Heizen der Harnstofflösung umfassen. Zum Heizen der Harnstofflösung kann die Temperiereinrichtung eine elektrisch betriebene und/oder eine von einem Kühlmittelkreislauf des Verbrennungsmotors gespeiste Heizleitung umfassen.

Die DE 10 2011 015 196 A1 lehrt einen Fahrzeugantrieb eines Schienenfahrzeugs, mit einer Heizung zum Erwärmen eines Reduktionsmittels in einem Reduktionsmittelbehälter. Der Fahrzeugantrieb umfasst einen Verbrennungsmotor, wobei in einem Betriebsmodus des Verbrennungsmotors in dessen Kühlkreis ein Kühlmittel mittels einer ersten, vom Verbrennungsmotor antreibbaren Kühlmittelpumpe zirkulierbar ist. Ferner umfasst der Fahrzeugantrieb ein erstes Erwärmungsleitungssystem mit einer zweiten Kühlmittelpumpe, mittels welcher das Kühlmittel durch einen Wärmetauscher im Reduktionsmittelbehälter hindurchpumpbar ist. Damit das Reduktionsmittel und der Verbrennungsmotor auch dann erwärmbar sind, wenn der Verbrennungsmotor abgeschaltet ist, umfasst der Fahrzeugantrieb ein zweites Erwärmungsleitungssystem mit einer Heizeinrichtung und einer dritten Kühlmittelpumpe, mittels welcher das Kühlmittel durch den Wärmetauscher im Reduktionsmittelbehälter und den Verbrennungsmotor hindurchpumpbar ist.

Es ist eine Aufgabe der Erfindung, ein verbessertes Verfahren zum Erwärmen eines Betriebsstoffs für ein Schienenfahrzeug, insbesondere zum Erwärmen eines Reduktionsmittels zur Abgasnachbehandlung, sowie eine Betriebsstoffheizung für ein Schienenfahrzeug, insbesondere zur Erwärmung eines Reduktionsmittels zur Abgasnachbehandlung, anzugeben. Hierbei soll dem Schienenfahrzeug, abgesehen von einer Notsituation, der Betriebsstoff immer in einem ausstreichenden Maß, also auch bei einem Start bei Außentemperaturen unter ca. -10°, zu Verfügung stehen. Es ist ferner eine Aufgabe der Erfindung, einen Antrieb, insbesondere Dieselantrieb, für ein Schienen- oder Kraftfahrzeug, und ein Schienen- oder Kraftfahrzeug zur Verfügung zu stellen.

Die Aufgabe der Erfindung ist durch ein Verfahren zum Erwärmen eines Betriebsstoffs für ein Schienenfahrzeug, insbesondere zum Erwärmen eines Reduktionsmittels zur Abgasnachbehandlung; mittels einer Betriebsstoffheizung für ein Schienenfahrzeug, insbesondere zur Erwärmung eines Reduktionsmittels zur Abgasnachbehandlung; und mittels eines Antriebs, insbesondere eines Dieselantriebs, für ein Schienen- oder Kraftfahrzeug, oder ein Schienen- oder Kraftfahrzeug, gemäß den unabhängigen Ansprüchen gelöst. - Vorteilhafte Weiterbildungen, zusätzliche Merkmale und/oder Vorteile der Erfindung ergeben sich aus den abhängigen Ansprüchen und/oder der folgenden Beschreibung der Erfindung.

Bei dem Verfahren wird in einem Betriebsmodus einer Betriebsstoffheizung durch eine Pumpe eine Kühlflüssigkeit durch einen Kühlkreis des Verbrennungsmotors hindurchgepumpt, wobei ferner im Betriebsmodus durch diese Pumpe die Kühlflüssigkeit durch einen Hauptwärmkreis zum Erwärmen des Betriebsstoffs in einem Vorratsbehälter hindurchgepumpt werden kann. In einem erfindungsgemäßen Vorwärmmodus der Betriebsstoffheizung ist der Hauptwärmkreis in zwei bevorzugt gegensinnig durchströmbare Teilkreise eines Vorwärmkreises aufgeteilt. Hierbei wird die durch ein Vorwärmgerät gewärmte Kühlflüssigkeit in den zwei Teilkreisen von einer Pumpe in einer Vorwärmleitung oder einer Pumpe des Vorwärmgeräts durch die zwei Teilkreise hindurchgepumpt. Und in einem erfindungsgemäßen Auftaumodus der Betriebsstoffheizung wird die durch das Vorwärmgerät gewärmte Kühlflüssigkeit durch denjenigen Teilkreis des Vorwärmkreises von der Pumpe in der Vorwärmleitung oder der Pumpe des Vorwärmgeräts hindurchgepumpt, welcher durch den Vorratsbehälter hindurchführt.

Die erfindungsgemäße Betriebsstoffheizung weist einen Kühlkreis für einen Verbrennungsmotor und einen an den Kühlkreis angeschlossenen Hauptwärmkreis zum Erwärmen eines Betriebsstoffs in einem Vorratsbehälter auf, wobei eine durch den Hauptwärmkreis zirkulierbare Kühlflüssigkeit mittels einer Pumpe des Kühlkreises in einem Betriebsmodus der Betriebsstoffheizung durch den Hauptwärmkreis pumpbar ist, wobei der Hauptwärmkreis mittels einer Vorwärmleitung und einer Pumpe in der Vorwärmleitung oder einer Pumpe eines Vorwärmgeräts in einen Vorwärmkreis überführbar ist, mittels welchem der Verbrennungsmotor und/oder der Betriebsstoff im Vorratsbehälter vorwärmbar ist bzw. sind, wobei der Vorwärmkreis bevorzugt zwei Teilkreise aufweist, und in einem Vorwärmmodus der Betriebsstoffheizung die Kühlflüssigkeit in den zwei Teilkreisen bevorzugt gegensinnig zirkulierbar ist, wobei im Vorwärmmodus die Kühlflüssigkeit von einer Pumpe in der Vorwärmleitung und/oder einer Pumpe des Vorwärmgeräts durch die zwei Teilkreise hindurchgepumpt wird. Und in einem erfindungsgemässen Auftaumodus der Betriebsstoffheizung wird die durch das Vorwärmgerät gewärmte Kühlflüssigkeit durch denjenigen Teilkreis des Vorwärmkreises von der Pumpe in der Vorwärmleitung oder Pumpe des Vorwärmgeräts hindurchgepumpt, welcher durch den Vorratsbehälter hindurchführt.

Der Hauptwärmkreis kann stromaufwärts mittels eines Hahns und/oder stromabwärts mittels eines Hahns und/oder einer Drossel in eine Fluidkommunikation mit dem Kühlkreis bringbar sein. Hierbei können der Hahn und die Drossel parallel geschaltet sein. Ferner kann der Hauptwärmkreis ein Ventil aufweisen, mittels welchem anhand einer Temperatur des Betriebsstoffs ein Kühlflüssigkeitsstrom durch den Hauptwärmkreis hindurch einstellbar ist.

Dieses Ventil ist bevorzugt als ein motorgesteuertes Ventil ausgebildet und kann stromaufwärts der Heizeinrichtung im Hauptwärmkreis vorgesehen sein. Der Hauptwärmkreis kann ferner im Vorratsbehälter wenigstens eine Heizeinrichtung aufweisen, mittels welcher eine Säule und ggf. ein bodennahes Kissen des Betriebsstoffs erwärmbar bzw. auftaubar ist. Darüber hinaus kann ein Ansaugbereich des Betriebsstoffs im Vorratsbehälter bzw. eine Ansaugöffnung eines Ansaugstutzens mittels einer Zusatzheizeinrichtung erwärmbar bzw. auftaubar sein. Das Vorwärmgerät kann als ein kraftstoffbetriebenes oder ein elektrisches Vorwärmgerät ausgebildet sein. Ferner ist die Pumpe als eine verbrennungsmotorbetriebene oder eine elektrisch betriebene Pumpe ausgebildet.

In den Hauptwärmkreis kann die Vorwärmleitung mit einem Vorwärmgerät eingekoppelt sein, wobei die Vorwärmleitung stromaufwärts und stromabwärts der Heizeinrichtung an den Hauptwärmkreis angeschlossen ist und mittels bevorzugt zweier Hähne in eine Fluidkommunikation mit dem Hauptwärmkreis bringbar ist. Im Vorwärmmodus ist der Kühlkreis des Verbrennungsmotors in einem Teilkreis des Vorwärmkreises von der Kühlflüssigkeit parallel durchströmbar.

Die Betriebsstoffheizung kann derart ausgebildet sein, dass bei einem Wechsel vom Vorwärmmodus in den Betriebsmodus und umgekehrt, eine Umkehr einer Zirkulationsrichtung durch die Leitungen des Hauptwärmkreises erfolgt, wobei im Vorwärmmodus das Ventil im Hauptwärmkreis über ein Rückschlagventil im Hauptwärmkreis überbrückt ist. Hierfür sind das Ventil und das Rückschlagventil bevorzugt parallel geschaltet. Ferner kann in der Vorwärmleitung eine Pumpe stromaufwärts oder stromabwärts des Vorwärmgeräts vorgesehen sein, welche nicht mit einer Pumpe des Vorwärmgeräts identisch ist.

In einem Auftaumodus der Betriebsstoffheizung ist die Kühlflüssigkeit bevorzugt lediglich in demjenigen Teilkreis des Vorwärmkreises zirkulierbar, welcher durch den Vorratsbehälter hindurchführt. Hierbei kann der Hahn des Hauptwärmkreises bzw. des anderen Teilkreises des Vorwärmkreises geschlossen und die Hähne in der Vorwärmleitung geöffnet sein. Im Vorwärmmodus und/oder im Auftaumodus ist bzw. sind der Verbrennungsmotor und/oder die Pumpe inaktiv. Die Vorwärmleitung kann ein Druckbegrenzungsventil aufweisen, wobei das Druckbegrenzungsventil bevorzugt zwischen einer Druckseite der Pumpe des Kühlkreises und dem Vorwärmgerät in der Vorwärmleitung vorgesehen ist, wodurch in einem Notstartmodus der Betriebsstoffheizung das Vorwärmgerät schützbar ist.

Die Erfindung ist im Folgenden anhand von Ausführungsbeispielen zweier Ausführungsformen einer Variante unter Bezugnahme auf die beigefügte schematische Zeichnung näher erläutert.

In den Figuren (FIG) der Zeichnung zeigen:
- FIG 1: eine schematische Ansicht eines Fahrzeugantriebs für ein Schienenfahrzeug mit einer erfindungsgemäßen Betriebsstoffheizung bei einem Stillstand des Schienenfahrzeugs;
- FIG 2: eine schematische Ansicht des erfindungsgemäßen Fahrzeugantriebs aus der FIG 1, wobei ein Betriebsmodus und ein Notstartmodus des Schienenfahrzeugs dargestellt sind;
- FIG 3: eine schematische Ansicht des erfindungsgemäßen Fahrzeugantriebs aus der FIG 1, wobei ein Vorwärmmodus eines Verbrennungsmotors und eines Vorratsbehälters des Schienenfahrzeugs dargestellt sind;
- FIG 4: eine schematische Ansicht des erfindungsgemäßen Fahrzeugantriebs aus der FIG 1, wobei ein Auftaumodus für einen Betriebsstoff in dem Vorratsbehälter des Schienenfahrzeugs dargestellt ist;
- FIG 5: eine schematische Ansicht eines alternativen Fahrzeugantriebs für ein Schienenfahrzeug mit einer erfindungsgemäßen Betriebsstoffheizung bei einem Stillstand des Schienenfahrzeugs; und
- FIG 6: eine Schemadarstellung eines aufgeschnittenen Vorratsbehälters zur Verdeutlichung einer Position einer Ansaugöffnung zum Ansaugen eines Betriebsstoffs innerhalb des Vorratsbehälters relativ zu einer Heizeinrichtung.

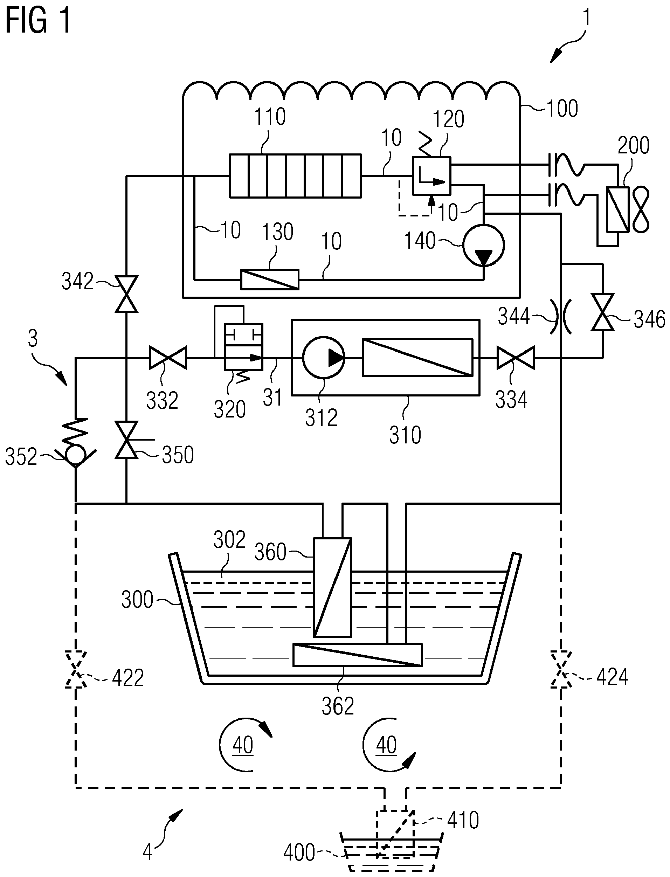

Die Erfindung ist im Folgenden anhand von Ausführungsbeispielen einer Variante (vgl. die FIG 1 bis 6) eines Verfahrens zum Erwärmen eines Betriebsstoffs 302 und einer Betriebsstoffheizung 3 für einen Fahrzeugantrieb 1 eines Schienenfahrzeugs näher erläutert. Die Erfindung ist jedoch nicht auf eine solche Variante und/oder die nachfolgend erläuterten Ausführungsformen beschränkt, sondern ist von grundlegenderer Natur, sodass sie auf sämtliche Antriebe 1 im Sinne der Erfindung, z. B. auch auf Kraftfahrzeuge, angewendet werden kann. - Obwohl die Erfindung im Detail durch bevorzugte Ausführungsbeispiele näher beschrieben und illustriert ist, so ist die Erfindung nicht durch diese offenbarten Beispiele eingeschränkt. Andere Variationen können hieraus abgeleitet werden ohne den Schutzumfang der Erfindung zu verlassen.

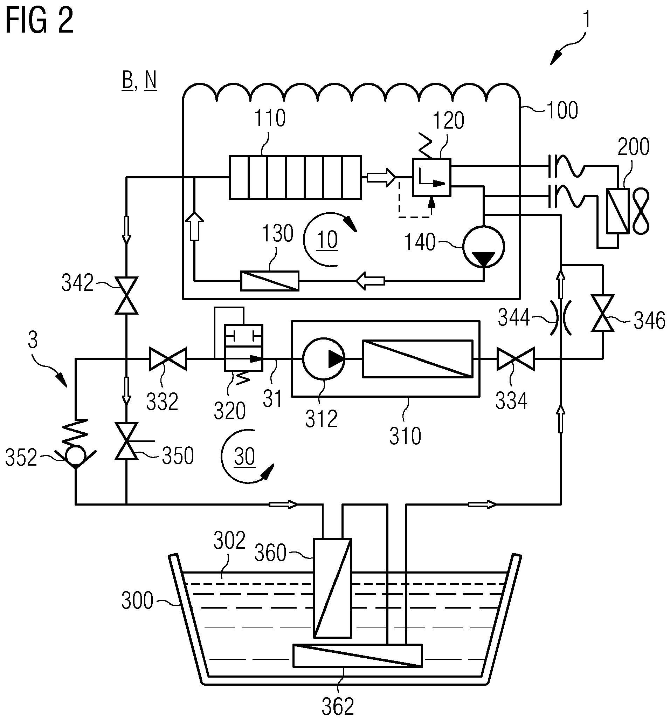

Die FIG 2 zeigt einen bekannten aktiven bzw. eingerichteten Kühlkreis 10 (Pfeile) eines Verbrennungsmotors 100, insbesondere eines Dieselmotors 100, des Fahrzeugantriebs 1 des Schienenfahrzeugs, mit z. B. den standardmäßigen Komponenten einer Mehrzahl von zu kühlenden Zylindern 110, einem Thermostat 120, einem Ölkühler 130, einer Motorpumpe 140 etc. Die Fluidleitungen bzw. ein Leitungssystem für eine Kühlflüssigkeit des Kühlkreises 10, bevorzugt ein Wasser-Glykol-Gemisch, führt dabei durch den Verbrennungsmotor 100 hindurch und an dessen Zylindern 110 vorbei (siehe auch unten). Zudem zeigen die FIG 1, welche die Betriebsstoffheizung 3 in einem stillgelegten Zustand zeigt, und die FIG 2 einen externen Kühler 200, durch welchen die Kühlflüssigkeit insbesondere in einem betriebswarmen Zustand des Verbrennungsmotors 100 bzw. des Fahrzeugantriebs 1 hindurchleitbar ist, damit diese ihre im Verbrennungsmotor 100 aufgenommene Wärme z. B. an die Umgebung abgeben kann.

Ferner zeigt die FIG 2 einen erfindungsgemäßen aktiven bzw. eingerichteten Hauptwärmkreis 30 (Pfeile) der Betriebsstoffheizung 3 für einen Vorratsbehälter 300 eines Betriebsstoffs 302, insbesondere eines Reduktionsmittels 302 für ein Abgasnachbehandlungssystem, des Schienenfahrzeugs. Bevorzugt ist das Reduktionsmittel 302 eine Harnstofflösung 302. Die Fluidleitungen bzw. ein Leitungssystem des Hauptwärmkreises 30 ist dabei bevorzugt an den Kühlkreis 10 angeschlossen und kann mit diesem in eine bevorzugt direkte fluidmechanische Verbindung gebracht werden. D. h. durch den Hauptwärmkreis 30 kann, wenn es die Bedingungen im Vorratsbehälter 300 erfordern, die Kühlflüssigkeit als ein Wärmmedium für den Betriebsstoff 302 im Vorratsbehälter 300 hindurchströmen. D. h. durch den Hauptwärmkreis 30 kann eine Abwärme des Verbrennungsmotors 100 für ein Erwärmen des Betriebsstoffs 302 verwendet werden.

Der Hauptwärmkreis 30 für den Vorratsbehälter 300 weist, neben den Fluidleitungen, z. B. den bevorzugt wärmeisolierten Vorratsbehälter 300 für den Betriebsstoff 302, insbesondere die Harnstofflösung 302, ein bevorzugt motorgesteuertes Ventil 350, ein Rückschlagventil 352, eine bevorzugt als Multifunktionseinheit 360 ausgebildete Heizeinrichtung 360 und ggf. eine Zusatzheizeinrichtung 362 im Vorratsbehälter 300 auf. - Im Bedarfsfall kann dieses Schema mit einem Zusatzheizkreis 40 einer Zusatzheizung 4 für ein weiteres Fluid bzw. einen weiteren Betriebsstoff, z. B. einen Kraftstoff, für das Schienenfahrzeug erweitert werden. D. h. der Zusatzheizkreis 40 kann an den Hauptwärmkreis 30, einen Vorwärmkreis 32; 32.1, 32.2 (siehe unten) und/oder einen Auftaukreis 34 (siehe unten) angeschlossen werden, welcher z. B. mittels manuell oder automatisiert betätigbaren Hähnen 422, 424 fluidmechanisch mit diesem bzw. diesen verbindbar ist. Natürlich können auch mehrere Zusatzheizkreise 40 vorgesehen sein.

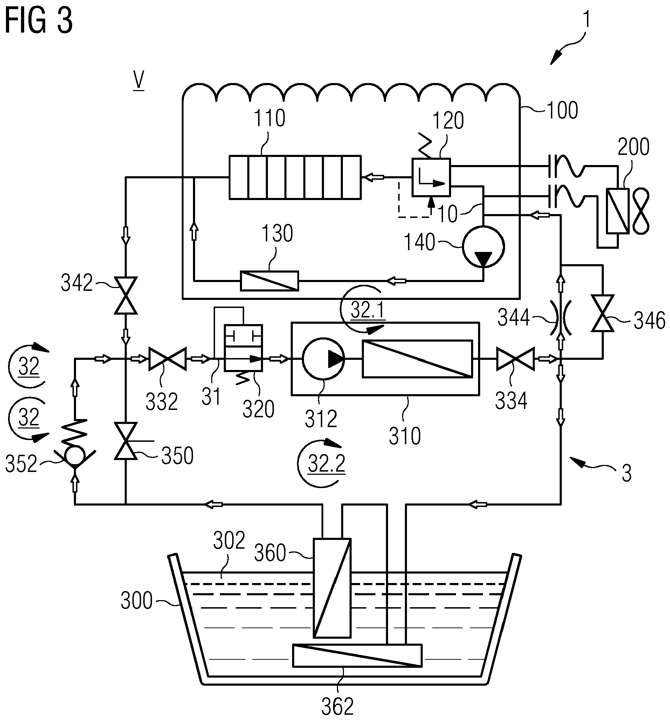

Die FIG 3 zeigt einen erfindungsgemäßen aktiven bzw. eingerichteten Vorwärmkreis 32 (Pfeile) der Betriebsstoffheizung 3 für den Vorratsbehälter 300 bzw. den Betriebsstoff 302. Die Fluidleitung(en) bzw. ein Leitungssystem für eine Realisierung des Vorwärmkreises 32 ist/sind dabei bevorzugt in den Hauptwärmkreis 30 eingekoppelt bzw. daran angeschlossen und kann mit diesem in eine bevorzugt direkte fluidmechanische Verbindung gebracht werden, wobei der Vorwärmkreis 32 den Hauptwärmkreis 30 derart aufteilt, dass dieser durch den Verbrennungsmotor 100 (erster Teilkreis 32.1) und/oder durch den Vorratsbehälter 300 hindurchführt (zweiter Teilkreis 32.2). D. h. gemäß der Erfindung kann durch den Vorwärmkreis 32, wenn es die Bedingungen im Verbrennungsmotor 100 und/oder im Vorratsbehälter 300 erfordern, die Kühlflüssigkeit als ein Wärmmedium für den Verbrennungsmotor 100 und/oder den Betriebsstoff 302 im Vorratsbehälter 300 dienen.

Mittels des Vorwärmkreises 32 wird eine nicht durch den Verbrennungsmotor 100 erzeugte Wärme zum Erwärmen des Verbrennungsmotors 100 und/oder des Betriebsstoffs 302 verwendet (siehe unten: Vorwärmgerät 310 in Vorwärmleitung 31). In Ausführungsformen der Erfindung kann lediglich der Verbrennungsmotor 100 oder lediglich der Betriebsstoff 302 durch den Vorwärmkreis 32 erwärmt werden (in der FIG 3 nicht dargestellt). Hierbei ist der jeweilig andere Teilkreis 32.1/32.2 des Vorwärmkreises 32 inaktiv. Es ist natürlich, wie in der FIG 3 dargestellt, möglich, dass sowohl der Verbrennungsmotor 100 als auch der Betriebsstoff 302 durch den Vorwärmkreis 32 erwärmt werden, wobei beide Teilkreise 32.1, 32.2 des Vorwärmkreises 32 aktiv (Pfeile) sind. In sämtlichen Ausführungsformen eines Vorwärmkreises 32 ist es bevorzugt, den Kühlkreis 10 des Verbrennungsmotors 100 parallel mit Kühlflüssigkeit zu durchströmen.

Der Vorwärmkreis 32 für den Vorratsbehälter 300 bzw. den darin befindlichen Betriebsstoff 302 weist, neben Fluidleitungen, als Vorwärmleitung 31 bezeichnet, zusätzlich zu den oben erwähnten Komponenten des Hauptwärmkreises 30, z. B. ein Vorwärmgerät 310, ein Druckbegrenzungsventil 320 und die manuell oder automatisiert betätigbaren Hähne 332, 334 auf. In einer Fluidverbindung zwischen dem Vorwärmkreis 32 und dem Kühlkreis 10 des Verbrennungsmotors 100, also in einem denjenigen Abschnitt des Hauptwärmkreises 30, welcher nicht zum Vorwärmkreis 32 gehört, weist der Hauptwärmkreis 30 bevorzugt einen Hahn 342, eine Drossel 344 und einen Hahn 346 eines Bypasses (Bypasshahn 346) auf. Die Hähne 324, 346 sind wiederum manuell oder automatisiert betätigbar.

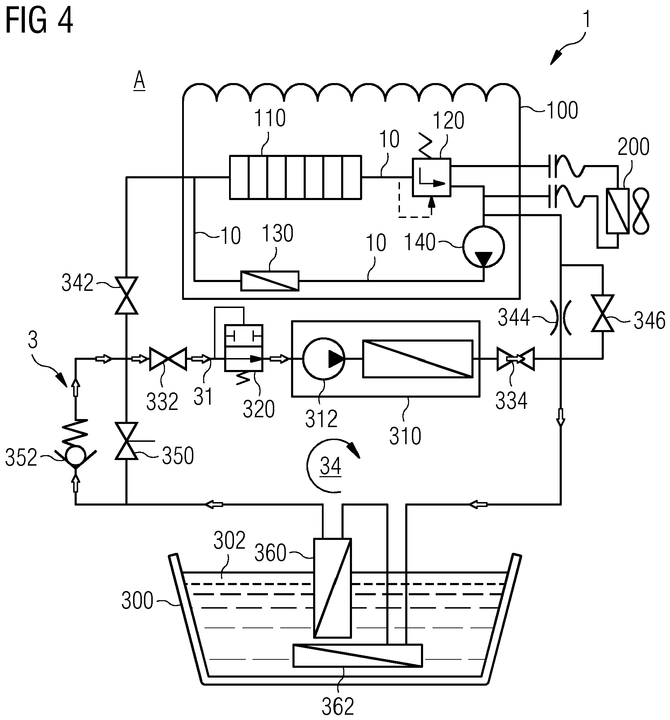

Die FIG 4 zeigt einen erfindungsgemäßen aktiven bzw. eingerichteten Auftaukreis 34 (Pfeile) der Betriebsstoffheizung 3 für den Vorratsbehälter 300 bzw. den Betriebsstoff 302. Die Fluidleitung(en) bzw. ein Leitungssystem für eine Realisierung des Auftaukreises 34 ist/sind dabei bevorzugt in den Hauptwärmkreis 30 eingekoppelt bzw. daran angeschlossen und kann mit diesem in eine bevorzugt direkte fluidmechanische Verbindung gebracht werden, wobei der Auftaukreis 34 den Hauptwärmkreis 30 derart überbrückt, dass dieser nur noch durch den Vorratsbehälter 300 hindurchführt. D. h. gemäß der Erfindung kann durch den Auftaukreis 34, wenn es die Bedingungen im Vorratsbehälter 300 erfordern, die Kühlflüssigkeit als ein Wärmmedium für den Betriebsstoff 302 im Vorratsbehälter 300 hindurchströmen.

Mittels des Auftaukreises 34 wird dabei eine nicht durch den Verbrennungsmotor 100 erzeugte Wärme zum Erwärmen des Betriebsstoffs 302 verwendet (siehe wiederrum unten: Vorwärmgerät 310). Gemäß der Erfindung kann der Auftaukreis 34 mit dem zweiten Teilkreis 32.2 des Vorwärmkreises 32 im Wesentlichen identisch sein (vgl. den Teilkreis 32.2 in FIG 3 mit dem Auftaukreis 34 in FIG 4). - Ferner kann der Auftaukreis 34 auch entgegen einem in der FIG 4 eingezeichneten Umlaufsinn durchströmt werden. Dies kann auch auf den Hauptwärmkreis 30, den Vorwärmkreis 32 und/oder den/die Teilkreis(e) 32.1, 32.2 der Betriebsstoffheizung 3 angewendet werden.

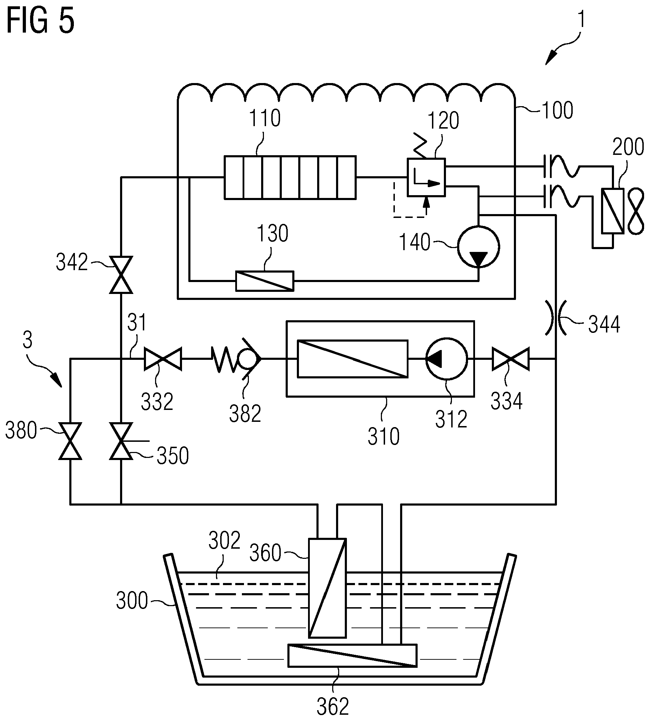

Die in den FIG 1 bis 5 abgebildeten Schemata decken die folgenden Betriebsfälle des Schienenfahrzeugs, des Fahrzeugantriebs 1 bzw. des Verbrennungsmotors 100 ab: Stillstand (FIG 1), laufender Verbrennungsmotor bzw. laufender Fahrzeugantrieb 1, bzw. Notstart (Einschalten des Verbrennungsmotors 100 bzw. des Fahrzeugantriebs 1 bei ggf. kaltem Verbrennungsmotor 100) des Schienenfahrzeugs (Betriebsmodus B, Notstartmodus N, FIG 2), einen Vorwärmbetrieb des Verbrennungsmotors 100 bzw. des Fahrzeugantriebs 1 und/oder des Vorratsbehälters 300 (Vorwärmmodus V, FIG 3) sowie einen Auftaubetrieb des Vorratsbehälters 300 (Auftaumodus A, FIG 4). Ferner zeigt die FIG 5 eine zur FIG 1 analoge Umgehungslösung.

Der in FIG 2 dargestellte Betriebsmodus B ist lediglich aktiv bei laufendem bzw. ausreichend warmen oder betriebswarmen Verbrennungsmotor 100, wobei die Motorpumpe 140 aktiv ist. Hierbei zirkuliert die Kühlflüssigkeit einerseits im Verbrennungsmotor 100 durch die Zylinder 110, durch das Thermostat 120, durch den Kühler 200, durch die Motorpumpe 140 und durch den Ölkühler 130 (bevorzugt in dieser Reihenfolge), also im Kühlkreis 10. Ferner zirkuliert andererseits die Kühlflüssigkeit durch den Hauptwärmkreis 30, also, ausgehend von einem Zulauf des Hauptwärmkreises 30 am Kühlkreis 10, durch den Hahn 342, das Ventil 350, die Heizeinrichtung 360, ggf. die Zusatzheizeinrichtung 362 und die Drossel 344 (bevorzugt in dieser Reihenfolge) über einen Abfluss Hauptwärmkreises 30 am Kühlkreis 10 zurück in den Kühlkreis 10.

Es strömt keine Kühlflüssigkeit durch den Vorwärmkreis 32 bzw. einen der beiden Teilkreise 32.1, 32.2 des Vorwärmkreises 32, weil die Hähne 332 und 334 geschlossen sind. Bei eingeschaltetem und laufendem Verbrennungsmotor 100 sind alle Steuerungs-, Regelungs- und/oder Überwachungsschaltungen des Schienenfahrzeugs aktiv. Das motorgesteuerte Ventil 350 steuert oder regelt anhand einer Temperatur des Betriebsstoffs 302, wofür ein Sensor am/im Vorratsbehälters 300 vorgesehen ist, eine Zufuhr von Kühlflüssigkeit durch den Hauptwärmkreis 30, der durch den Vorratsbehälter 300 führt. Eine Überhitzung des Betriebsstoffs 302 kann dadurch verhindert werden. Ein Bypass 352 (Rückschlagventil 352) wird durch die Druckverhältnisse im Hauptwärmkreis 30 geschlossen.

Im in der FIG 3 dargestellten Vorwärmmodus V läuft nur eine Pumpe 312 des Vorwärmgeräts 310. Der Verbrennungsmotor 100 und dessen Motorpumpe 140 sind im Vorwärmmodus V abgeschaltet. Die Basis für diesen Betriebszustand ist, dass eine Temperatur der Kühlflüssigkeit unterhalb einer Startschwelle für den Verbrennungsmotor 100 liegt. In diesem Betriebszustand strömt die Kühlflüssigkeit sowohl durch den Verbrennungsmotor 100 als auch durch den Vorratsbehälter 300 bzw. den darin befindlichen Betriebsstoff 302. Sollte es notwendig sein, kann ein Volumenstrom durch den Vorratsbehälter 300 mittels der Drossel 344 eingestellt werden. Es besteht jedoch auch die Möglichkeit, eine Vorwärmung des Verbrennungsmotors 100 zu priorisieren, in dem die Drossel 344 (Blende) über einen Bypass 346 (Hahn 346) hindurch überbrückt wird.

Der Vorratsbehälter 300 wird bevorzugt immer gewärmt, wenn der Vorwärmmodus V aktiv ist. Während des Betriebszustands Vorwärmmodus V sind nahezu sämtliche Steuerungs-, Regelungs- und/oder Überwachungsschaltungen des Schienenfahrzeugs abgeschaltet. Somit kann das motorgesteuerte Ventil 350 die Temperatursteuerung- oder -regelung nicht übernehmen, es bleibt geschlossen. Die Kühlflüssigkeit strömt in diesem Betriebszustand über den Bypass 352, also durch das Rückschlagventil 352 hindurch. Die Hähne 332, 334 sind in diesem Betriebsfall geöffnet. - Es ist natürlich auch möglich, das Erwärmen des Vorratsbehälters 300 im Vorwärmmodus V zu unterbinden (nicht dargestellt).

Ein Überhitzen des Betriebsstoffs 302 ist dennoch nicht möglich, weil das Vorwärmgerät 310 eine interne Temperatursteuerung oder -regelung besitzt, welche eine Temperatur der Kühlflüssigkeit zwischen den Temperaturschwellen für einen Start des Verbrennungsmotors 100 steuert bzw. einregelt. Die obere Temperaturschwelle für den Start des Verbrennungsmotors 100 ist unterhalb der Temperatur, ab welcher der Betriebsstoff 302 Schaden nehmen würde. Ein Einfrieren des Betriebsstoffs 302 ist ebenfalls ausgeschlossen, da bei niedrigen Außentemperaturen der Verbrennungsmotor 100 ebenfalls auskühlt und somit die Temperatur der Kühlflüssigkeit unter eine Starttemperatur des Verbrennungsmotors 100 fällt, was ein automatisches Einschalten des Vorwärmgeräts 310 nach sich zieht.

Sollte das Schienenfahrzeug für längere Zeit in einer Umgebung mit niedrigen Temperaturen abgestellt werden, könnte der Betriebsstoff 302 im Vorratsbehälter 300 teilweise oder vollständig einfrieren. Ist der Betriebsstoff 302 z. B. Harnstofflösung 302, so ist diese in einem solchen Fall nicht beschädigt und muss für die Inbetriebnahme des Schienenfahrzeugs lediglich aufgetaut werden. Für diesen Fall wird ein Auftaumodus A aktiviert, was in der FIG 4 dargestellt ist. Dabei wird bevorzugt die gesamte Heizleistung des Vorwärmgeräts 310 für ein Auftauen des eingefrorenen Betriebsstoffs 302 verwendet. Für den Auftaumodus A wird der Hahn 342 geschlossen und die Hähne 332, 334 geöffnet. Somit zirkuliert die Kühlflüssigkeit nur durch das Vorwärmgerät 310 und den Vorratsbehälter 300.

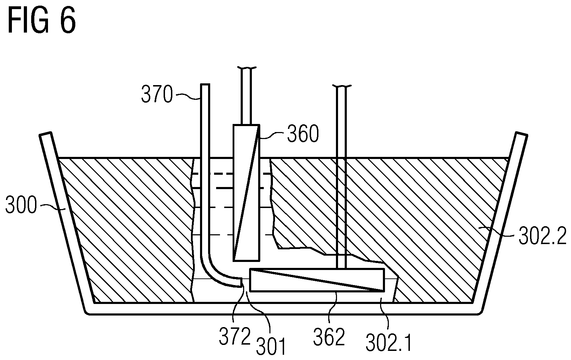

Bevorzugt wird primär ein Ansaugbereich 301 des Betriebsstoffs 302 im Vorratsbehälter 300 erwärmt (vgl. FIG 6). Dies wird durch die Heizeinrichtung 360 der bevorzugt multifunktionalen Ansaugapparatur, also der Multifunktionseinheit 360, und ggf. der Zusatzheizeinrichtung 362 um einen Ansaugstutzen 370 (FIG 6) herum realisiert. Aufgrund dieser bevorzugt doppelten Heizung ist von einer sicheren Verflüssigung des Betriebsstoffs 302 im Ansaugbereich 301 auszugehen. Ziel dabei ist es nicht, den Betriebsstoff 302 möglichst großvolumig aufzutauen, sondern gezielt wenigstens nur um eine Ansaugöffnung 372 eines Ansaugstutzens 370 für den Betriebsstoff 302 im Vorratsbehälter 300.

Ein Heizelement der Heizeinrichtung 360 ist bevorzugt vertikal in einer Nähe des Ansaugstutzens 370 angeordnet. Es taut somit einen vertikalen Flüssigkeitszylinder (flüssiger Betriebsstoff 302.1) in einen gefrorenen Betriebsstoff 302.2. Die bevorzugt bodennahe Zusatzheizeinrichtung 362 des Vorratsbehälters 300 taut den gefrorenen Betriebsstoff 302.2 von einer Unterseite her auf. Vor Allem bei einem geringen Volumen des Betriebsstoffs 302 im Vorratsbehälter 300 wird durch die bodennahe Zusatzheizeinrichtung 362 mehr Wärme in den gefrorenen Betriebsstoff 302.2 eingebracht. Um die unten im Vorratsbehälter 300 befindliche Ansaugöffnung 372 entsteht bei dieser Anordnung der Heizeinrichtungen 360, 362 ein Flüssigkeitskissen (flüssiger Betriebsstoff 302.1) im Bodenbereich (Zusatzheizeinrichtung 362) des Vorratsbehälters 300 und ein Flüssigkeitszylinder entlang der Heizeinrichtung 360.

Damit sind wenigstens ausreichende Saugverhältnisse gegeben, weil die bodennahe Zusatzheizeinrichtung 362 ein flächiges Flüssigkeitspolster aufbaut und der vertikale Flüssigkeitszylinder um die Heizeinrichtung 360 herum eine Flüssigkeitssäule darstellt, die das unten liegende Flüssigkeitspolster unter Druck setzt und mit ihm in Fluidkommunikation steht. Es ist damit ferner gewährleistet, dass das unten liegende Flüssigkeitspolster immer in Kontakt mit gefrorenem Betriebsstoff 302.2 steht, womit ein kontinuierlicher Wärmeübergang zwischen diesen beiden Schichten gesichert ist.

Im Auftaumodus A sind sämtliche Steuerungs-, Regelungs- und/oder Überwachungsschaltungen deaktiviert. Somit kann das motorgesteuerte Ventil 350 einen Auftaubetrieb nicht steuern oder regeln. Wie im Vorwärmmodus V übernimmt die interne Steuerung/Regelung des Vorwärmgeräts 310 einen Überhitzungsschutz für den Betriebsstoff 302. Kann nach einer gewissen Zeitspanne von einer gewissen Verflüssigung des Betriebsstoffs 302 um die Ansaugöffnung 372 im Ansaugbereich 301 ausgegangen werden, kann der Auftaumodus A durch Öffnen des Hahns 342 in den Vorwärmmodus V überführt werden. Wie oben bereits beschrieben strömt in diesem Betriebsfall Kühlflüssigkeit durch den Verbrennungsmotor 100 und den Vorratsbehälter 300. Das bedeutet, das Auftauen des Betriebsstoffs 302 wird fortgesetzt, jedoch mit reduzierter Geschwindigkeit, weil parallel dazu der Verbrennungsmotor 100 ebenfalls aufgewärmt wird.

Sollte in diesem Fall die Vorwärmung des Verbrennungsmotors 100 zu langsam erfolgen, kann der Hahn 346 geöffnet werden, damit ein Volumenstrom an vorgewärmter Kühlflüssigkeit durch den Verbrennungsmotor 100 höher wird. Hat die Kühlflüssigkeit im Verbrennungsmotor 100 die Starttemperatur erreicht, erfolgt der Start des Verbrennungsmotors 100. Das Vorwärmgerät 310 wird abgeschaltet, die Hähne 332, 334 werden geschlossen und die Motorpumpe 140 übernimmt einen Druckaufbau und somit ein Umwälzen der Kühlflüssigkeit. Das Auftauen bzw. Erwärmen des Betriebsstoffs 302 wird bevorzugt auch bei laufendem Verbrennungsmotor 100 weitergeführt. Da bei laufendem Verbrennungsmotor 100 alle Steuerungs-, Regelungs- und/oder Überwachungsschaltungen aktiv sind, übernimmt das motorgesteuerte Ventil 350 die Temperatursteuerung bzw. -regelung im Vorratsbehälter 300. Eine Zirkulation der Kühlflüssigkeit durch den Vorratsbehälter 300 dreht sich in diesem Betriebsfall gegenüber dem Vorwärmmodus V um, das Rückschlagventil 352 versperrt den Bypass 352.

Bei einem Notstart (Notstartmodus N, vgl. FIG 2) sind keine Bedienhandlungen eines Schienenfahrzeugführers in einem Maschinenraum vorgesehen - beispielsweise Hähne zu öffnen. In außergewöhnlichen Situationen ist es notwendig, den Verbrennungsmotor 100 sofort zu starten. Das bedeutet, dass die Hähne 342, 346 in geöffneter Stellung bleiben können, obwohl der Verbrennungsmotor 100 startet. In diesem Fall schützt das Druckbegrenzungsventil 320 das Vorwärmgerät 310 vor zu großem Druck in der Kühlflüssigkeit. Eine Flussrichtung der Kühlflüssigkeit durch den Vorratsbehälter 300 des Betriebsstoffs 302 kehrt sich automatisch um, das Rückschlagventil 352 schließt und das motorgesteuerte Ventil 350 übernimmt die Steuerung/Regelung der Temperatur des Betriebsstoffs 302.

Die FIG 5 zeigt eine alternative Ausführungsform des Fahrzeugantriebs 1, wobei der Vorwärmkreis 32 eine zu oben umgekehrte Flussrichtung aufweist. Hierbei geht das Rückschlagventil 352 über in einen Hahn 380 und das Druckbegrenzungsventil 320 geht über in ein Rückschlagventil 382. Mit einer solchen Ausführungsform der Erfindung können alle oben beschriebenen Betriebsfälle realisiert werden, d. h. den Betriebsmodus B bei eingeschaltetem Verbrennungsmotor 100, den Vorwärmmodus V, den Auftaumodus A und den Notstartmodus N.

Gemäß der Erfindung können diese vier Modi B, V, A, N nur mit fluidmechanischen Baugruppen ohne eine Zusatzpumpe realisiert werden. Es wird in allen Modi B, V, A, N (Betriebsfälle) ein Überhitzen des Betriebsstoffs 302 und bei eingeschaltetem Vorwärmgerät 310 ein Einfrieren des Betriebsstoffs 302, insbesondere einer Harnstofflösung 302, unterbunden. Ferner gewährleistet nicht nur die Heizeinrichtung 360 ein Auftauen und Aufwärmen, sondern der Ansaugbereich 301 wird bevorzugt mit der insbesondere mit der Heizeinrichtung 360 parallel oder in Reihe geschalteten Zusatzheizung 362 erwärmt. Mittels dieser Anordnung wird in einem Vereisungsfall schnell und nachhaltig die Harnstofflösung 302 im Ansaugbereich 301 aufgetaut, wodurch der Verbrennungsmotor 100 schnell in Betrieb genommen werden kann.

Gemäß der Erfindung ist eine Komplettheizung des Vorratsbehälters 300 obsolet, weil die Versorgung mit flüssigem Betriebsstoff 302 auf diese Weise sichergestellt ist. Das System benötigt keine elektrische Zusatzheizung, da das Vorwärmgerät 310 bevorzugt kraftstoffbetrieben ist. Natürlich kann das Vorwärmgerät 310 auch ein elektrisches Vorwärmgerät 310 sein. Mittels der Drossel 344 und dem Hahn 346 können die Modi B, V, A, N eingestellt bzw. priorisiert werden, um eine individuelle Reaktion bei speziellen Umgebungsbedingungen realisieren zu können. Ein Wechsel vom Vorwärmmodus V in den Betriebsmodus B und ggf. umgekehrt führt jeweils zu einer Umkehr einer Flussrichtung der Kühlflüssigkeit in einem Wärmkreis des Vorratsbehälters 300. Dadurch wird das motorgesteuerte Ventil 350 im Bedarfsfall automatisch durch das Rückschlagventil 352 überbrückt bzw. in Flussrichtung der Kühlflüssigkeit gesetzt.

Im Notstartmodus N schützt das Druckbegrenzungsventil 320 das Vorwärmgerät 310. Und im Fall einer zu schwachen Pumpe 312 im Vorwärmgerät 310 kann eine weitere Pumpe in Reihe vor oder nach dem Vorwärmgerät 310 zugeschaltet sein. Gemäß der Erfindung sind sämtliche Hähne 332, 334, 342, 346, 380, 422, 424 manuell oder automatisiert (elektrisch, pneumatisch) betätigbar. Statt einem oder einer Mehrzahl von Hähnen 332, 334, 342, 346, 380, 422, 424 kann auch ein oder eine Mehrzahl von Ventilen 332, 334, 342, 346, 380, 422, 424 angewendet werden, die bevorzugt automatisiert (elektrisch, pneumatisch) betätigbar sind.

## Patentansprüche

1. Verfahren zum Erwärmen eines Betriebsstoffs (302) für ein Schienenfahrzeug, insbesondere zum Erwärmen eines Reduktionsmittels (302) zur Abgasnachbehandlung, wobei
in einem Betriebsmodus (B) einer Betriebsstoffheizung (3) durch eine Pumpe (140) eine Kühlflüssigkeit durch einen Kühlkreis (10) des Verbrennungsmotors (100) hindurchgepumpt wird, wobei ferner im Betriebsmodus (B) durch diese Pumpe (140) die Kühlflüssigkeit durch einen Hauptwärmkreis (30) zum Erwärmen des Betriebsstoffs (302) in einem Vorratsbehälter (300) hindurchgepumpt werden kann, und in einem Vorwärmmodus (V) der Betriebsstoffheizung (3) der Hauptwärmkreis (30) in zwei durchströmbare Teilkreise (32.1, 32.2) eines Vorwärmkreises (32; 32.1, 32.2) aufgeteilt wird, wobei die mittels eines Vorwärmgeräts (310) gewärmte Kühlflüssigkeit in den zwei Teilkreisen (32.1, 32.2) von einer Pumpe in einer Vorwärmleitung (31) oder einer Pumpe (312) des Vorwärmgeräts (310) durch die zwei Teilkreise (32.1, 32.2) hindurchgepumpt wird, **dadurch gekennzeichnet, dass** in einem Auftaumodus (A) der Betriebsstoffheizung (3) die durch das Vorwärmgerät (310) gewärmte Kühlflüssigkeit durch lediglich denjenigen Teilkreis (32.2) des Vorwärmkreises (32; 32.1, 32.2) von der Pumpe in der Vorwärmleitung (31) oder der Pumpe (312) des Vorwärmgeräts (310) hindurchgepumpt wird, welcher durch den Vorratsbehälter (300) hindurchführt.

2. Betriebsstoffheizung für ein Schienenfahrzeug, insbesondere zur Erwärmung eines Reduktionsmittels (302) zur Abgasnachbehandlung, mit
einem Kühlkreis (10) für einen Verbrennungsmotor (100) und einem an den Kühlkreis (10) angeschlossenen Hauptwärmkreis (30) zum Erwärmen eines Betriebsstoffs (302) in einem Vorratsbehälter (300), und eine durch den Hauptwärmkreis (30) zirkulierbare Kühlflüssigkeit mittels einer Pumpe (140) des Kühlkreises (10) in einem Betriebsmodus (B) der Betriebsstoffheizung (3) durch den Hauptwärmkreis (30) pumpbar ist, und der Hauptwärmkreis (30) mittels einer Vorwärmleitung (31) und einer Pumpe in der Vorwärmleitung (31) oder einer Pumpe (312) eines Vorwärmgeräts (310) in einen Vorwärmkreis (32; 32.1, 32.2) überführbar ist, mittels welchem der Verbrennungsmotor (100) und/oder der Betriebsstoff (302) im Vorratsbehälter (300) vorwärmbar ist bzw. sind, wobei
der Vorwärmkreis (32; 32.1, 32.2) zwei Teilkreise (32.1, 32.2) aufweist, und in einem Vorwärmmodus (V) der Betriebsstoffheizung (3) die Kühlflüssigkeit in den zwei Teilkreisen (32.1, 32.2) zirkulierbar ist, wobei im Vorwärmmodus (V) die Kühlflüssigkeit von einer Pumpe in der Vorwärmleitung (31) und/oder einer Pumpe (312) des Vorwärmgeräts (310) durch die zwei Teilkreise (32.1, 32.2) hindurchgepumpt wird, **dadurch gekennzeichnet, dass** in einem Auftaumodus (A) der Betriebsstoffheizung (3) die durch das Vorwärmgerät (310) gewärmte Kühlflüssigkeit durch lediglich denjenigen Teilkreis (32.2) des Vorwärmkreises (32; 32.1; 32.2) von der Pumpe in der Vorwärmleitung (31) oder der Pumpe (312) des Vorwärmgeräts (310) hindurchgepumpt wird, welcher durch den Vorratsbehälter (300) hindurchführt.

3. Betriebsstoffheizung gemäß vorhergehendem Anspruch, **dadurch gekennzeichnet, dass** im Vorwärmmodus (V) die Kühlflüssigkeit in den zwei Teilkreisen (32.1, 32.2) gegensinnig zirkulierbar ist.

4. Betriebsstoffheizung gemäß einem der vorhergehenden Ansprüche 2-3, **dadurch gekennzeichnet, dass**:
• der Hauptwärmkreis (30) stromaufwärts mittels eines Hahns (342) und/oder stromabwärts mittels eines Hahns (346) und/oder einer Drossel (344) in eine Fluidkommunikation mit dem Kühlkreis (10) bringbar ist;
• der Hauptwärmkreis (30) ein Ventil (350) aufweist, mittels welchem anhand einer Temperatur des Betriebsstoffs (302) ein Kühlflüssigkeitsstrom durch den Hauptwärmkreis (30) hindurch einstellbar ist;
• der Hauptwärmkreis (30) im Vorratsbehälter (300) wenigstens eine Heizeinrichtung (360, 362) aufweist, mittels welcher eine Säule und ggf. ein bodennahes Kissen des Betriebsstoffs (302) erwärmbar bzw. auftaubar ist; und/oder
• ein Ansaugbereich (301) des Betriebsstoffs (302) im Vorratsbehälter (300) bzw. eine Ansaugöffnung (372) eines Ansaugstutzens (370) mittels einer Zusatzheizeinrichtung (362) erwärmbar bzw. auftaubar ist.

5. Betriebsstoffheizung gemäß einem der vorhergehenden Ansprüche 2-4, **dadurch gekennzeichnet, dass** in den Hauptwärmkreis (30) die Vorwärmleitung (31) mit einem Vorwärmgerät (310) eingekoppelt ist, wobei die Vorwärmleitung (31) stromaufwärts und stromabwärts der Heizeinrichtung (360, 362) an den Hauptwärmkreis (30) angeschlossen ist und mittels zweier Hähne (332, 334) in eine Fluidkommunikation mit dem Hauptwärmkreis (30) bringbar ist.

6. Betriebsstoffheizung gemäß einem der vorhergehenden Ansprüche 2-5, **dadurch gekennzeichnet, dass** im Vorwärmmodus (V) der Kühlkreis (10) des Verbrennungsmotors (100) in einem Teilkreis (32.1) des Vorwärmkreises (32; 32.1, 32.2) von der Kühlflüssigkeit parallel durchströmbar ist.

7. Betriebsstoffheizung gemäß einem der vorhergehenden Ansprüche 2-6, **dadurch gekennzeichnet, dass** die Betriebsstoffheizung (3) derart ausgebildet ist, dass bei einem Wechsel vom Vorwärmmodus (V) in den Betriebsmodus (B) und umgekehrt, eine Umkehr einer Zirkulationsrichtung durch die Leitungen des Hauptwärmkreises (30) erfolgt, wobei im Vorwärmmodus (V) das Ventil (350) im Hauptwärmkreis (30) über ein Rückschlagventil (352) im Hauptwärmkreis (30) überbrückt ist.

8. Betriebsstoffheizung gemäß einem der vorhergehenden Ansprüche 2-7, **dadurch gekennzeichnet, dass** in einem Auftaumodus (A) der Betriebsstoffheizung (3) die Kühlflüssigkeit bevorzugt lediglich in demjenigen Teilkreis (32.2) des Vorwärmkreises (32; 32.1, 32.2) zirkulierbar ist, welcher durch den Vorratsbehälter (300) hindurchführt, wobei
bevorzugt der Hahn (342) des Hauptwärmkreises (30) bzw. des anderen Teilkreises (32.1) des Vorwärmkreises (32; 32.1, 32.2) geschlossen ist und die Hähne (332, 334) in der Vorwärmleitung (31) geöffnet sind.

9. Betriebsstoffheizung gemäß einem der vorhergehenden Ansprüche 2-8, **dadurch gekennzeichnet, dass** die Vorwärmleitung (31) ein Druckbegrenzungsventil (320) aufweist, wobei das Druckbegrenzungsventil (320) bevorzugt zwischen einer Druckseite der Pumpe (140) des Kühlkreises (10) und dem Vorwärmgerät (310) in der Vorwärmleitung (31) vorgesehen ist, wodurch in einem Notstartmodus (N) der Betriebsstoffheizung (3) das Vorwärmgerät (310) schützbar ist.

10. Betriebsstoffheizung gemäß einem der vorhergehenden Ansprüche 2-9, **dadurch gekennzeichnet, dass**:
• die Pumpe (140) als eine verbrennungsmotorbetriebene oder eine elektrisch betriebene Pumpe (140) ausgebildet ist;
• der Hahn (346) und die Drossel (344) im Hauptwärmkreis (30) bzw. im ersten Teilkreis (32.1) des Vorwärmkreises (32; 32.1, 32.2) parallel geschaltet sind;
• das Ventil (350) als ein motorgesteuertes Ventil (350) ausgebildet ist;
• das Ventil (350) stromaufwärts der Heizeinrichtung (360) im Hauptwärmkreis (300) vorgesehen ist;
• das Vorwärmgerät (310) als ein kraftstoffbetriebenes oder ein elektrisches Vorwärmgerät (310) ausgebildet ist;
• im Vorwärmmodus (V) und/oder im Auftaumodus (A) der Verbrennungsmotor (100) und/oder die Pumpe (140) inaktiv ist bzw. sind;
• in der Vorwärmleitung (31) eine Pumpe stromaufwärts oder stromabwärts des Vorwärmgeräts (310) vorgesehen ist;
• das Ventil (350) und das Rückschlagventil (352) parallel geschaltet sind; und/oder
• durch die Betriebsstoffheizung (3) ein Verfahren nach Anspruch 1 durchführbar ist.

11. Antrieb, insbesondere Dieselantrieb, für ein Schienen- oder Kraftfahrzeug, oder Schienen- oder Kraftfahrzeug, **dadurch gekennzeichnet, dass**
durch den Antrieb (1) oder das Schienen- oder Kraftfahrzeug ein Verfahren nach Anspruch 1 durchgeführt wird, oder
der Antrieb oder das Schienen- oder Kraftfahrzeug eine Betriebsstoffheizung (3) nach einem der Ansprüche 2 bis 10 aufweist.

## Claims

1. Method for heating an operating agent (302) for a rail vehicle, particularly for heating a reducing agent (302) for aftertreatment of exhaust gas, wherein
in one operating mode (B) of an operating agent heating system (3), a coolant liquid is pumped by a pump (140) through a coolant circuit (10) of the internal combustion engine (100), wherein further in operating mode (B), the coolant liquid can be pumped by this pump (140) through a main heating circuit (30) for heating the operating agent (302) in a reservoir (300), and
in a preheating mode (V) of the operating agent heating system (3) the main heating circuit (30) is divided into two sub-circuits (32.1, 32.2) of a preheating circuit (32; 32.1, 32.2) though which liquid can flow, wherein the coolant liquid heated by a preheating device (310) in the two sub-circuits (32.1, 32.2) is pumped by a pump in a preheating line (31) or a pump (312) of the preheating device (310) through the two sub-circuits (32.1, 32.2), **characterised in that** in a thawing mode (A) of the operating agent heating system (3), the coolant liquid heated by the preheating device (310) is pumped by the pump in the preheating line (31) or the pump (312) of the preheating device (310) through only that sub-circuit (32.2) of the preheating circuit (32; 32.1, 32.2) which leads through the reservoir (300).

2. Operating agent heating system for a rail vehicle, particularly for heating a reducing agent (302) for aftertreatment of exhaust gas, with
a coolant circuit (10) for an internal combustion engine (100) and a main heating circuit (30), for heating an operating agent (302) in a reservoir (300), connected to the coolant circuit (10), and a coolant liquid able to be circulated through the main heating circuit (30) is able to be pumped by means of a pump (140) of the coolant circuit (10) through the main heating circuit (30) in an operating mode (B) of the operating agent heating system (3), and
the main heating circuit (30) is able to be changed by means of a preheating line (31) and a pump in the preheating line (31) or a pump (312) of a preheating device (310) into a preheating circuit (32; 32.1, 32.2), by means of which the internal combustion engine (100) and/or the operating agent (302) in the reservoir (300) is or are able to be preheated, wherein
the preheating circuit (32; 32.1, 32.2) has two sub-circuits (32.1, 32.2), and in a preheating mode (V) of the operating agent heating system (3), the coolant liquid is able to be circulated in the two sub-circuits (32.1, 32.2), wherein in the preheating mode (V) the coolant liquid is able to be pumped by a pump in the preheating line (31) and/or a pump (312) of the preheating device (310) through the two sub-circuits (32.1, 32.2);
**characterised in that** in a thawing mode (A) of the operating agent heating system (3), the coolant liquid heated by the preheating device (310) is pumped by the pump in the preheating line (31) or the pump (312) of the preheating device (310) through only that sub-circuit (32.2) of the preheating circuit (32; 32.1; 32.2) which leads through the reservoir (300).

3. Operating agent heating system according to the preceding claim, characterised that in the preheating mode (V) the coolant liquid can be circulated in opposite directions in the two sub-circuits (32.1, 32.2).

4. Operating agent heating system according to one of the preceding claims 2-3, **characterised in that**:
• the main heating circuit (30) is able to be brought into a fluid communication with the coolant circuit (10) upstream by means of a faucet (342) and/or downstream by means of a faucet (346) and/or a throttle (344);
• the main heating circuit (30) has a valve (350) by means of which, on the basis of a temperature of the operating agent (302), a coolant liquid flow through the main heating circuit (30) is able to be set;
• the main heating circuit (30) has at least one heating device (360, 362) in the reservoir (300), by means of which a column and if necessary a cushion close to the floor of the operating agent (302) is able to be heated or thawed;
and/or
• a suction region (301) of the operating agent (302) in the reservoir (300) or a suction opening (372) of a suction nozzle (370) is able to be heated or thawed by means of an additional heating device (362).

5. Operating agent heating system according to one of the preceding claims 2-4, **characterised in that** the preheating line (31) with a preheating device (310) is coupled into the main heating circuit (30), wherein
the preheating line (31) is connected to the main heating circuit (30) upstream and downstream of the heating device (360, 362) and is able to be brought into a fluid communication with the main heating circuit (30) by means of two faucets (332, 334).

6. Operating agent heating system according to one of the preceding claims 2-5, **characterised in that** in the preheating mode (V) the coolant liquid is able to flow in parallel through the coolant circuit (10) of the internal combustion engine (100) in one sub-circuit (32.1) of the preheating circuit (32; 32.1, 32.2).

7. Operating agent heating system according to one of the preceding claims 2-6, **characterised in that** the operating agent heating system (3) is embodied such that, for a switch from preheating mode (V) into operating mode (B) and vice versa,
a switchover in the direction of circulation through the lines of the main heating circuit (30) is brought about, wherein, in preheating mode (V), the valve (350) in the main heating circuit (30) is bridged over via a non-return valve (352) in the main heating circuit (30).

8. Operating agent heating system according to one of the preceding claims 2-7, **characterised in that**, in a thawing mode (A) of the operating agent heating system (3), the coolant liquid is preferably able to be circulated only **in that** sub-circuit (32.2) of the preheating circuit (32; 32.1, 32.2) that leads through the reservoir (300), wherein
preferably the faucet (342) of the main heating circuit (30) or of the other sub-circuit (32.1) of the preheating circuit (32; 32.1, 32.2) is closed and the faucets (332, 334) in the preheating line (31) are opened.

9. Operating agent heating system according to one of the preceding claims 2-8, **characterised in that** the preheating line (31) has a pressure-limiting valve (320), wherein the pressure-limiting valve (320) is preferably provided between a pressure side of the pump (140) of the coolant circuit (10) and the preheating device (310) in the preheating line (31), whereby the preheating device (310) is able to be protected in an emergency start mode (N) of the operating agent heating system (3).

10. Operating agent heating system according to one of the preceding claims 2-9, **characterised in that**:
• the pump (140) is embodied as an internal combustion engine-driven or an electrically-driven pump (140);
• the faucet (346) and the throttle (344) are connected in parallel in the main heating circuit (30) or in a first sub-circuit (32.1) of the preheating circuit (32; 32.1, 32.2);
• the valve (350) is embodied as a motorized valve (350);
• the valve (350) is provided upstream of the heating device (360) in the main heating circuit (300);
• the preheating device (310) is embodied as a fuel-driven or an electrical preheating device (310);
• in preheating mode (V) and/or in thawing mode (A) the internal combustion engine (100) and/or the pump (140) is or are inactive;
• in the preheating line (31) a pump is provided upstream or downstream of the preheating device (310);
• the valve (350) and the non-return valve (352) are connected in parallel; and/or
• a method according to claim 1 is able to be carried out by the operating agent heating system (3).

11. Drive, in particular diesel drive, for a rail vehicle or a motor vehicle, or rail vehicle or motor vehicle, **characterised in that**
a method according to claim 1 is carried out by the drive (1) or the rail vehicle or motor vehicle, or
the drive or the rail vehicle or motor vehicle has an operating agent heating system (3) according to one of claims 2 to 10.

## Revendications

1. Procédé destiné à réchauffer un carburant (302) pour un véhicule ferroviaire, en particulier destiné à réchauffer un agent de réduction (302) destiné au retraitement des gaz d'échappement, dans lequel
dans un mode de fonctionnement (B) d'un système de chauffage de carburant (3) par le biais d'une pompe (140) un liquide de refroidissement est pompé à travers un circuit de refroidissement (10) du moteur à combustion interne (100), dans lequel en outre dans le mode de fonctionnement (B) par le biais de cette pompe (140) le liquide de refroidissement peut être pompé à travers un circuit de réchauffage principal (30) destiné à réchauffer le carburant (302) dans un réservoir (300), et
dans un mode de préchauffage (V) du chauffage de carburant (3) le circuit de réchauffage principal (30) est divisé en deux parties de circuit (31.1, 32.2) d'un circuit de préchauffage (32 ; 32.1, 32.2) qui peuvent être traversées, dans lequel le liquide de refroidissement réchauffé au moyen d'un appareil de préchauffage (310) est pompé dans deux parties de circuit (32.1, 32.2) par une pompe dans une conduite de préchauffage (31) ou une pompe (312) de l'appareil de préchauffage (310) à travers les deux parties de circuit (32.1, 32.2), **caractérisé en ce que**
dans un mode de dégivrage (A) du chauffage de carburant (3) le liquide de refroidissement réchauffé par le biais de l'appareil de préchauffage (310) est pompé uniquement à travers la partie de circuit (32.2) du circuit de préchauffage (32 ; 32.1, 32.2) par la pompe dans la conduite de préchauffage (31) ou la pompe (312) de l'appareil de préchauffage (310), qui passe à travers le réservoir (300).

2. Système de chauffage de carburant pour véhicule ferroviaire, en particulier destiné à réchauffer un agent de réduction (302) destiné au retraitement des gaz d'échappement, avec
un circuit de refroidissement (10) pour un moteur à combustion interne (100) et un circuit de réchauffage principal (30) raccordé au circuit de refroidissement (10) et destiné à réchauffer un carburant (302) dans un réservoir (300), et un liquide de refroidissement pouvant circuler à travers le circuit de réchauffage principal (30) peut être pompé au moyen d'une pompe (140) du circuit de refroidissement (10) dans un mode de fonctionnement (B) du système de chauffage de carburant (3) à travers le circuit de réchauffage principal (30),
et
le circuit de réchauffage principal (30) peut être transféré dans un circuit de préchauffage (32 ; 32.1, 32.2) au moyen d'une conduite de préchauffage (31) et d'une pompe dans une conduite de préchauffage (31) ou d'une pompe (312) d'un appareil de préchauffage (310), circuit de préchauffage au moyen duquel le moteur à combustion interne (100) et/ou le carburant (302) peut resp. peuvent être préchauffés dans le réservoir (300), dans lequel
le circuit de préchauffage (32 ; 32.1, 32.2) présente deux parties de circuit (32.1, 32.2), et dans un mode de préchauffage (V) du système de chauffage de carburant (3) le liquide de refroidissement peut circuler dans les deux parties de circuit (32.1, 32.2), dans lequel dans le mode de préchauffage (V) le liquide de refroidissement est pompé par une pompe dans la conduite de préchauffage (31) et/ou une pompe (312) de l'appareil de préchauffage (310) à travers les deux parties de circuit (32.1, 32.2), **caractérisé en ce que** dans un module de dégivrage (A) du système de chauffage de carburant (3) le liquide de refroidissement réchauffé par le biais de l'appareil de préchauffage (310) est pompé uniquement à travers la partie de circuit (32.2) du circuit de préchauffage (32 ; 32.1, 32.2) par la pompe dans la conduite de préchauffage (31) ou la pompe (312) de l'appareil de préchauffage (310), qui passe à travers le réservoir (300).

3. Système de chauffage de carburant selon la revendication précédente, **caractérisé en ce que** dans le mode de préchauffage (V) le liquide de refroidissement peut circuler en sens contraire dans les deux parties de circuit (32.1, 32.2).

4. Système de chauffage de carburant selon l'une des revendications précédentes 2-3, **caractérisé en ce que** :
• le circuit de réchauffage principal (30) peut être mis en communication de fluide avec le circuit de refroidissement (10) en amont au moyen d'un robinet (342) et/ou en aval au moyen d'un robinet (346) et/ou d'un restricteur (344) ;
• le circuit de réchauffage principal (30) présente une vanne (350) au moyen de laquelle un flot de liquide de refroidissement peut être ajusté à travers le circuit de réchauffage principal (30) à l'aide d'une température du carburant (302) ;
• le circuit de réchauffage principal (30) présente dans le réservoir (300) au moins un dispositif de chauffage (360, 362), au moyen duquel une colonne et le cas échéant un coussinet, près du sol, du carburant (302) peuvent être réchauffés resp. dégivrés ;
et/ou
• une zone d'aspiration (301) du carburant (302) dans le réservoir (300) resp. une ouverture d'aspiration (372) d'un orifice d'aspiration (370) peuvent être réchauffées resp. dégivrées au moyen d'un dispositif de chauffage supplémentaire (362).

5. Système de chauffage de carburant selon l'une des revendications précédentes 2-4, **caractérisé en ce que** la conduite de préchauffage (31) est couplée avec un appareil de préchauffage (310) dans le circuit de réchauffage principal (30), dans lequel la conduite de préchauffage (31) peut être raccordée en amont et en aval du dispositif de chauffage (360, 362) au circuit de réchauffage principal (30) et mise en communication de fluide avec le circuit de réchauffage principal (30) au moyen de deux robinets (332, 334).

6. Système de chauffage de carburant selon l'une des revendications précédentes 2-5, **caractérisé en ce que** dans le mode de préchauffage (V) le circuit de refroidissement (10) du moteur à combustion interne (100) dans une partie de circuit (32.1) du circuit de préchauffage (32.1; 32.2) peut être traversé en parallèle par le liquide de refroidissement.

7. Système de chauffage de carburant selon l'une des revendications 2-6, **caractérisé en ce que** le système de chauffage de carburant (3) est réalisé de telle sorte que lors d'un passage du mode de préchauffage (V) au mode d'exploitation (B) et inversement un renversement d'une direction de circulation s'effectue par le biais des conduites du circuit de réchauffage principal (30), dans lequel dans le mode de préchauffage (V) la vanne (350) dans le circuit de réchauffage principal (30) est pontée via un clapet de retenue (352) dans le circuit de réchauffage principal (30).

8. Système de chauffage de carburant selon l'une des revendications 2-7, **caractérisé en ce que** dans un mode de dégivrage (A) du système de chauffage de carburant (3) le liquide de refroidissement peut circuler de préférence uniquement dans la partie de circuit (32.2) du circuit de préchauffage (32 ; 32.1, 32.2), qui passe à travers le réservoir (300), dans lequel
de préférence le robinet (342) du circuit de réchauffage principal (30) resp. de l'autre partie de circuit (32.1) du circuit de préchauffage (32 ; 32.1, 32.2) est fermé et les robinets (332, 334) dans la conduite de préchauffage (31) sont ouverts.

9. Système de chauffage de carburant selon l'une des revendications précédentes 2-8, **caractérisé en ce que** la conduite de préchauffage (31) présente une vanne de limitation de pression (320), dans lequel la vanne de limitation de pression (320) est prévue dans la conduite de préchauffage (33) de préférence entre un côté pression de la pompe (140) du circuit de refroidissement (10) et l'appareil de préchauffage (310), moyennant quoi dans un mode de démarrage de secours (N) du système de chauffage de carburant (3) l'appareil de préchauffage (310) peut être protégé.

10. Système de chauffage de carburant selon l'une des revendications précédentes 2-9, **caractérisé en ce que** :
• la pompe (140) est réalisée en tant que pompe (140) entraînée par un moteur à combustion interne ou entraînée électriquement ;
• le robinet (346) et le restricteur (344) sont montés en parallèle dans le circuit de réchauffage principal (30) resp. dans la première partie de circuit (32.1) du circuit de préchauffage (32 ; 32.1, 32.2) ;
• la vanne (350) est réalisée en tant que vanne (350) commandée par un moteur ;
• la vanne (350) est prévue en amont du dispositif de chauffage (360) dans le circuit de réchauffage principal (300) ;
• l'appareil de préchauffage (310) est réalisé en tant qu'appareil de préchauffage (310) entraîné par un carburant ou électrique ;
• dans le mode de préchauffage (V) et/ou le mode de dégivrage (A) le moteur à combustion interne (100) et/ou la pompe (140) est resp. sont inactifs ;
• dans la conduite de préchauffage (31) une pompe est prévue en amont ou en aval de l'appareil de préchauffage (310) ;
• la vanne (350) et le clapet de retenue (352) sont montés en parallèle ; et/ou
• un procédé selon la revendication 1 peut être exécuté par le biais du système de chauffage de carburant (3).

11. Entraînement, en particulier entraînement diesel, pour un véhicule ferroviaire ou automobile, ou véhicule ferroviaire ou automobile, **caractérisé en ce que** par le biais de l'entraînement (1) ou du véhicule ferroviaire ou automobile un procédé selon la revendication 1 est exécuté, ou
l'entraînement ou le véhicule ferroviaire ou automobile présente un système de chauffage de carburant (3) selon l'une des revendications 2 à 10.
